Europäisches Patentamt

European Patent Office

Office européen des brevets

(11) Publication number: **0 511 699 B1**

## EUROPEAN PATENT SPECIFICATION

(45) Date of publication of patent specification: **09.08.95**

(51) Int. Cl.⁶: **B32B 15/01**, C22C 38/18, F01N 3/28

(21) Application number: **92201049.1**

(22) Date of filing: **14.04.92**

(54) **Aluminium-coated iron-chromium foil containing additions of rare earths or yttrium.**

(30) Priority: **29.04.91 US 693103**

(43) Date of publication of application:
**04.11.92 Bulletin 92/45**

(45) Publication of the grant of the patent:
**09.08.95 Bulletin 95/32**

(84) Designated Contracting States:
**DE FR IT**

(56) References cited:
**EP-A- 0 091 526**
**EP-A- 0 246 939**
**DE-A- 3 734 977**
**DE-C- 3 726 073**
**GB-A- 2 070 642**

(73) Proprietor: **GENERAL MOTORS CORPORA-TION**
**General Motors Building**
**3044 West Grand Boulevard**
**Detroit**
**Michigan 48202 (US)**

(72) Inventor: **Sigler, David Rudolph**
**13876 Halleck**
**Sterling Heights, MI 48313 (US)**

(74) Representative: **Denton, Michael John et al**
**Patent Section**
**1st Floor**
**Gideon House**
**28 Chapel Street**
**Luton**
**Bedfordshire LU1 2SE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

This invention generally relates to aluminium-coated ferritic stainless steel alloys which are suitable for extended thermal cycling at elevated temperatures. More particularly, this invention relates to such an aluminium-coated ferritic stainless steel alloy which contains approximately 20 weight percent chromium, iron and typical steel-making impurities including low levels of sulphur, as specified in the preamble of claim 1.

Typical automotive catalytic converters utilize a metal foil monolith structure for support of catalytically-active materials which convert noxious exhaust gases to harmless gases during operation of the automobile. The metal foil monolith material is extremely thin, generally of the order of about 0.05 millimetres thick. To survive in this harsh environment, wherein the hot automotive exhaust gases envelope the catalytic converter, the foil monolith must have excellent oxidation resistance even at temperatures greater than 1000°C.

Currently, the standard foil material used in the automotive production of these monoliths is an Fe-20Cr-5Al-rare earth alloy. This alloy is extremely oxidation-resistant particularly at elevated temperatures. Upon exposure to elevated temperatures, such as in an exhaust environment, the relatively high level of aluminium (about 5 weight percent) within the alloy forms a protective layer of aluminium oxide. This layer of aluminium oxide is characterized by being continuous, slow-growing and adherent.

While this Fe-20Cr-5Al-rare earth alloy performs satisfactorily as the monolith support in catalytic converter applications, the automotive industry is continually seeking alternatives to the use of this foil, primarily in an effort to reduce costs. The high cost of this alloy is principally due to its relatively high aluminium content of about 5 weight percent. The aluminium within the alloy significantly reduces the ductility of the material, thereby resulting in undesirably high costs associated with the processing of the material. Because of its low ductility, relatively inexpensive processing methods, such as continuous slab casting, cannot be used in manufacturing the alloy because thermally-induced stresses caused by rapid cooling during the continuous casting would cause the alloy slab to crack. Therefore, to avoid cracking, the alloy is almost always ingot-cast. However, this is not a preferred alternative, since the tops and bottoms of the cast ingots generally contain gross inhomogeneities and therefore must be removed prior to hot-working of the material, resulting in unacceptably poor yields.

Also, the poor ductility of the material due to its high aluminium content further complicates the preparation of the cast ingot surface for subsequent hot-working. In order to remove casting defects, so as to obtain a high surface quality, surface-grinding must be performed on the material. It is preferred that the surface-grinding operation should occur at room temperature, where ingot handling and inspection are easier, which results in a markedly better surface finish. Unfortunately, this Fe-20Cr-5Al-rare earth material must be surface-ground at high temperatures in order to avoid ingot cracking which would result from the thermally-induced stresses during cooling. High-temperature grinding invariably results in a surface finish of a poorer quality as compared to a surface which is ground at room temperature.

In addition, the poor surface quality of the cast ingot material coupled with its low ductility cause excessive strip breakage during cold-rolling of the alloy. Typically, after final rolling of this material to produce the desired foil, only about 40-60 percent of the original cast ingot is retrieved.

In an effort to avoid these shortcomings associated with the use of the conventional Fe-20Cr-5Al-rare earth alloy, it has also been proposed to use a ferritic stainless steel which does not contain aluminium, and then subsequently to coat the foil with aluminium. At high temperatures, the aluminium coating simultaneously diffuses into the base metal forming the iron-chromium-aluminium alloy, and oxidizes forming an aluminium oxide protective skin. However, generally these materials are characterized by poorer oxidation resistance as compared to the conventional aluminium-containing material, Fe-20Cr-5Al-rare earth alloy.

Therefore, it is evident that a material is required which will provide the requisite oxidation resistance at elevated temperatures, particularly over continued thermal cycling, yet which will also readily lend itself to commercial manufacturing processes.

An aluminium-coated ferritic stainless steel foil according to the present invention is defined in claim 1 and a monolithic support foil is defined in claim 5. Preferred embodiments are defined in dependent claims 2 to 4 and 6 and 7.

It is an object of the present invention to provide an aluminium-coated ferritic stainless steel material which is characterized by superb oxidation resistance and which is suitable for extended thermal cycling at elevated temperatures.

It is a further object of this invention that the ferritic stainless steel, which is subsequently aluminium-coated, should contain standard amounts of chromium and the normal steel-making impurities including sulphur, but essentially no aluminium, and wherein either rare earth elements or yttrium are added in an

2

amount such that the atom ratio of the rare earth and/or yttrium addition to the amount of sulphur present is at least one.

It is still a further object of this invention that such an aluminium-coated ferritic stainless steel foil will be suitable for use in automotive environment, particularly as a monolith catalytic converter support.

In accordance with a preferred embodiment of this invention, these and other objects and advantages are accomplished as follows.

An aluminium-coated ferritic stainless steel is provided which is suitable for use as an automobile monolith catalytic converter support. The ferritic stainless steel base metal foil consists essentially of, by weight, 15-25% chromium, normal steelmaking impurities including up to about 0.03% sulphur, an addition from the group consisting of cerium, lanthanum, neodymium, praseodymium and yttrium, wherein the atom ratio of the total addition from this group is at least one as compared to the sulphur content of the base metal foil, and a balance of iron. Preferably the amount of aluminium within the ferritic stainless steel base metal is negligible.

After strip of appropriate thickness is produced from the alloy of this invention, it is coated with aluminium so as to obtain an average aluminium content within the composite material (which consists of the aluminium coating and the iron-chromium base metal foil) of approximately five weight percent. Because the base metal is essentially aluminium-free and the aluminium-coating is applied after the primary rolling process, the iron-chromium base metal alloy of this invention, which is relatively ductile, can be easily rolled to very thin gauges required for the formation of monolith catalytic converter supports, in contrast to the conventional Fe-20Cr-5Al alloy strip.

The aluminium-coated ferritic stainless steel alloy of this invention is particularly useful for oxidation resistance in high-temperature environments, such as the monolith catalytic converter support for automobile exhaust gas conversion. The material is resistant to thermal cycling effects and scaling at elevated temperatures. During exposure of the aluminium-coated alloy to high temperatures, a protective layer of aluminium oxide forms on its surface. The oxide layer is continuous, slow-growing and tenaciously adherent to the base metal foil, thereby providing outstanding oxidation resistance.

The oxidation resistance of the aluminium-coated iron-chromium material of this invention is comparable to the conventional aluminium-containing Fe-20Cr-5Al-rare earth alloy currently used within the automotive industry as the catalytic converter monolith support structure, and considerably higher than conventional aluminium-coated stainless steels. In addition, the ductility of the aluminium-coated iron-chromium material of this invention is higher, making the processing of the material much easier as compared to the conventional oxidation-resistant materials, particularly the aluminium-containing Fe-20Cr-5Al-rare earth alloy.

An inventive feature of this material is that the ferritic stainless steel base metal foil contains essentially no aluminium other than that amount which may possibly be introduced during normal steelmaking procedures. (In practice, steelmakers prefer to omit all aluminium if possible since aluminium is so extremely reactive.) However, the alloy does contain an addition from the group consisting of cerium, lanthanum, neodymium, praseodymium and yttrium. The total addition from this group is in an amount such that the atom ratio is at least one as compared to the amount of the sulphur content within the base metal foil.

The addition of the rare earths, particularly cerium and lanthanum, or yttrium to the base metal alloy will eventually cause the formation of stable sulphide particles within the aluminium-coated base metal foil. This prevents the sulphur within the aluminium-coated base metal from diffusing out to the interface between the oxide layer and the metal foil, whereat it could cause oxide-spalling and thereby prevent good adherence between the oxide and metal.

Yet the virtual elimination of aluminium from the base metal alloy results in a material having increased ductility as compared to the conventional iron-chromium-aluminium alloys. The aluminium-free base metal alloy of this invention can be continually cast, as well as surface-ground at room temperature without excessive cracking. In addition, the aluminium-free alloy of this invention can tolerate a higher degree of remaining surface defects during the rolling process, as compared to the conventional aluminium-containing alloy. Therefore the processing costs associated with the alloy of this invention are significantly reduced.

Lastly, the aluminium-coated ferritic stainless steel of this invention exhibits good aluminium oxide whisker growth upon exposure to the elevated temperatures. This is important since it is the aluminium oxide whiskers which carry the subsequently-deposited catalytically-active materials when used in a catalytic converter environment for conversion of exhaust gases. Therefore, it is desirable that the material be capable of growing high-aspect ratio oxide whiskers so as to ensure good adherence between the catalytically-active materials and the foil.

Other objects and advantages of this invention will be better appreciated from the detailed description thereof, which follows.

The above and other advantages of this invention will become more apparent from the following description taken in conjunction with the accompanying drawings, in which:

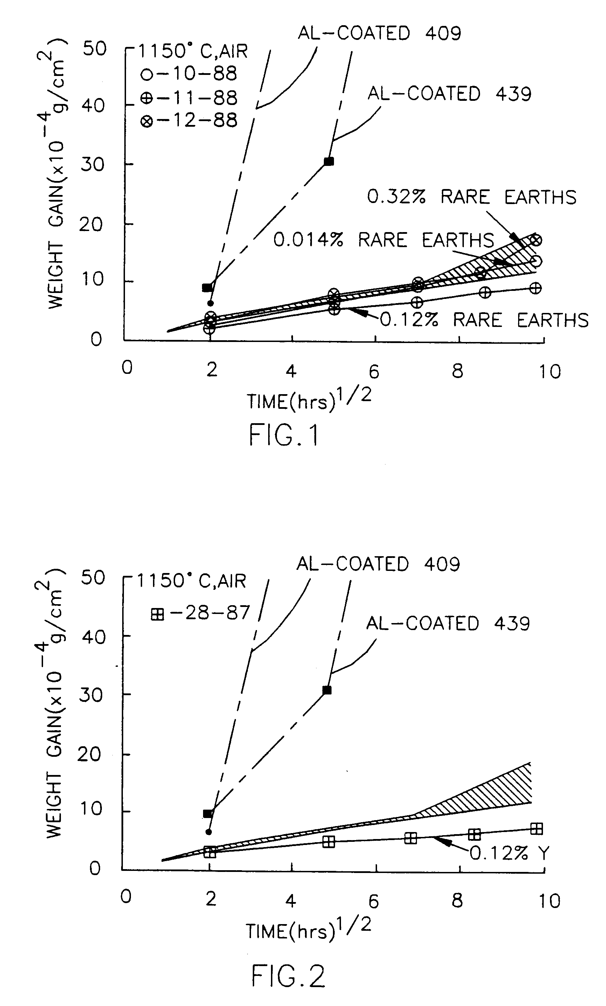

Figures 1 to 3 are graphs showing weight gain behaviour for various materials, including aluminium-coated ferritic stainless steel samples formed in accordance with this invention, which were oxidized in air at 1150°C.

In accordance with this invention, an aluminium-coated ferritic stainless steel foil is provided which is characterized by superb oxidation resistance even over extended thermal cycling at elevated temperatures. The aluminium-coated ferritic stainless steel foil is particularly suited for use in an automotive environment as a monolith catalytic converter support.

The aluminium-coated ferritic stainless steel of this invention consists essentially of, by weight, 15-25% chromium, normal steelmaking impurities including up to about 0.03% sulphur, an addition from the group consisting of cerium, lanthanum, neodymium, praseodymium and yttrium, and a balance of iron. The atom ratio of the total addition from this group is at least one as compared to the sulphur content of the steel. Preferably the amount of aluminium within the ferritic stainless steel base metal is negligible. After the material is appropriately rolled to the desired sheet thickness, it is coated with aluminium so as to obtain an average aluminium content within the composite material (which consists of the aluminium coating and the iron-chromium base metal foil) of approximately five weight percent. The composite material is then preferably further rolled to a foil.

This aluminium-coated ferritic stainless steel foil contains reactive elements, i.e., the rare earths or yttrium, for control of sulphur within the aluminium-coated alloy. During oxidation of the coated alloy, the reactive elements, which form stable, refractory sulphides, prevent migration of the sulphur to the interface between the metal and the oxide layer. At the interface, the sulphur can cause spalling and thereby prevent good adherence between the coated metal and the oxide layer.

More specifically, the alloys of this invention were formed as follows. The chemical composition of the various alloys, as cast, are listed in Table I with the balance being of iron.

TABLE I

| Heat | Cr | Al | C | N | O | S | Y | Ce | Total* Rare Earth |
|------|------|-----|-------|-------|--------|-------|-------|-------|-------------------|
| Rare Earth-Containing Alloys: | | | | | | | | | |
| 10-88 | 20.3 | 0.0 | 0.015 | 0.016 | 0.003 | 0.001 | - | 0.007 | 0.014 |
| 11-88 | 20.3 | 0.0 | 0.009 | 0.013 | 0.002 | 0.001 | - | 0.061 | 0.123 |
| 12-88 | 20.3 | 0.0 | 0.013 | 0.013 | <0.001 | 0.001 | - | 0.16 | 0.324 |
| 29-87** | 19.1 | 1.2 | 0.010 | 0.013 | 0.002 | 0.003 | - | 0.017 | 0.034 |
| Yttrium-Containing Alloys | | | | | | | | | |
| 28-87 | 19.5 | 0.0 | 0.010 | 0.005 | 0.003 | 0.001 | 0.12 | - | - |
| 31-87** | 19.2 | 0.9 | 0.010 | 0.019 | 0.002 | 0.001 | 0.029 | - | - |

** outside the scope of the invention
*Based on commercially-available misch metal mixture containing by weight, approximately 46.8% cerium, 29.2% lanthanum, 14.4% neodymium, 4.4% praseodymium and 5.2% iron.

The above alloys were conventionally formed by melting in a vacuum induction furnace. A standard Fe-20Cr alloy, in the form of ingots, was used as the melt stock for forming these various alloys. Accordingly, the resulting alloys contained approximately 20 weight percent chromium. Although 20 percent chromium appears to optimize the results of this invention, it is believed that the chromium content can range between about 15 and 25 weight percent without detrimental effects to the material and with generally similar results being obtained. Foreseeably, the range of chromium could even extend from 15 to 25 weight percent. Certainly if too small an amount of chromium is present, then the oxidation and corrosion-resistant properties of the alloy will suffer. Alternatively, if too large an amount of chromium is present, the physical properties of the alloy may suffer.

Two of the alloys, 29-87** and 31-87**, had approximately one weight percent aluminium added to reduce oxygen and nitrogen levels within the alloy, since aluminium has a high affinity for these elements. (** outside the scope of the invention).

Also, it is interesting to note that, while the cast alloys contained little sulphur, as indicated in the table above, the Fe-20Cr melt stock which was used contained approximately 0.006% sulphur. It is believed that

4

the reactive element additions of rare earth metals and yttrium reduced the overall sulphur level by forming sulphides which most likely floated off as a dross during the vacuum-induction melting process.

In addition, as shown from the table, other normal steelmaking additions, such as carbon, nitrogen and oxygen are present in typical amounts. Typically, the carbon and nitrogen levels would not exceed normal limits of about 0.05 weight percent and the oxygen would not exceed about 0.02 weight percent.

Next, the various alloys were each hot-rolled first and then cold-rolled to a sheet of approximately 0.5 millimetres thickness using conventional techniques. It is preferred that the sheets be formed in this manner since the first hot-rolling steps re-crystallize the cast-ingot steel, ridding it of any casting defects such as porosity. During the hot-rolling steps, a section of the cast billet which was roughly about 2.5 centimetres thick was incrementally reduced to about 1/10 of this thickness, or about 2.5 millimetres, over a series of rolling steps. Cold-rolling was then used for the final reduction to the desired 0.5 millimetres thick strip.

Sample substrates from each of the various alloys were coated with aluminium by a process disclosed in US Patent No. 2,569,097 to Grange et al, entitled "Method of Coating Ferrous Metal with aluminium or an aluminium Alloy" issued September 25, 1951. Although that process was originally intended for coating cold-rolled steel, hot-rolled steel and cast iron, the process works satisfactorily with stainless steels also.

Specifically, the experimental process used to aluminium-coat the alloy strips was as follows. Sample coupons for each alloy, approximately 14 centimetres long by approximately 3.2 centimetres wide, were cut from the cold-rolled sheet of approximately 0.5 millimetre thickness. The sample coupons were re-crystallized, to remove the cold-worked structure resulting from the previous cold-rolling steps, by annealing in an inert gas atmosphere at about 900°C. Oxide which formed during this annealing step was polished off with a wire wheel. The surfaces of each coupon were then etched to remove any remaining oxide with an aggressive HF-HNO$_3$ solution for three minutes at about 50°C to 60°C. The particular acid solution used was about 18 volume percent HNO$_3$ and about four volume percent HF in water.

Aluminium coating of each sample coupon was then performed in a small clay-graphite crucible. The bottom of the crucible was filled with commercial-purity aluminium, specifically 1100 grade aluminium. A granular-like salt flux was placed on top of the aluminium. The salt flux consisted of approximately, by weight, 40%NaCl, 40%KCl, 10%AlF$_6$ and 10%Na$_3$AlF$_6$.Both the salt flux and aluminium bath beneath it were of sufficient depth that the sample coupons could be entirely suspended in each of them when the salt flux and aluminium became molten.

The salt-covered aluminium bath was heated to between about 704°C and 718°C. The sample coupons were dipped into the molten salt for approximately one minute. This step pre-heated the coupons whilst simultaneously reducing any oxide on their surfaces. Although one minute was utilized, a shorter immersion time in the salt bath would probably be adequate, but this was not investigated. Certainly the sample coupons must be immersed within the salt bath for a sufficient duration to effect proper cleaning of the surfaces, which is probably only about 10 seconds, but the samples must not be immersed for too long a duration since the salt bath will eventually attack the ferritic base metal. It is proposed that a duration of at most 10 minutes in the salt bath is the maximum. However, as stated previously, a one minute immersion in the salt bath produced the desired results of a clean surface with no detrimental attacking of the material.

The samples were then lowered into the molten aluminium bath for two minutes. Whilst the coupon is immersed in the aluminium bath, aluminium reacts with the coupon to form three distinct layers, an aluminium-diffusion zone within the base metal, an intermediate layer of iron-aluminium intermetallic compounds, and an outer layer of pure aluminium. By immersing the samples for two minutes within the aluminium bath, this was a sufficient amount of time so as to produce an average aluminium composition of approximately five weight percent for the composite coated sample, including the base metal, diffusion zone, intermetallic zone and coating. Since all surfaces of the strip coupons were being coated simultaneously within the aluminium bath, an approximate five weight percent composition translated into an aluminium coating of about 0.03-0.05 millimetres in thickness.

It is to be noted that during subsequent exposure to elevated temperatures, the aluminium coating concurrently diffuses into the stainless steel base metal and reacts with any available oxygen, whether within the base metal alloy or in the surrounding atmosphere. After a sufficient amount of time at the elevated temperature, the resulting structure will no longer have a discrete aluminium coating, but rather be composed of an iron-chromium-aluminium alloy covered by an aluminium oxide protective layer. Therefore, when coating the base metal, the aluminium layer can theoretically be formed to any thickness which is practical, so as to result in the desired aluminium content within the final material. An aluminium content of about 5 weight percent appears to be optimal for providing the desired oxidation resistance, but it is foreseeable that suitable results would also be obtained with an aluminium content of about three to seven weight percent. Therefore the aluminium coating would be deposited to a corresponding thickness by appropriately modifying the duration of immersion within the aluminium bath.

5

The samples were then removed from the aluminium bath through the salt flux. Therefore considerable salt residue was retained on the sample surface. To remove the bulk of the residue, the samples were thoroughly rinsed with hot water. The samples were then again cold-rolled to form an approximately 0.05 millimetres-thick foil. No intermediate anneals were necessary or performed. Additional hot-water rinsing was required after some of the cold-rolling steps so as to ensure that the salt residue was completely removed.

After cleaning and rolling, samples were cut off each end of each foil for chemical analysis and for determination of the average aluminium content. There was some deviation in the aluminium content depending on the location of the analysis within the foil sample. This was believed to be due to the fact that, as the samples were removed from the aluminium bath, molten aluminium flowed downwards along the foil sample. Therefore, an average aluminium content was determined from measurements taken from the pieces cut off from both ends of the foil. The centre portion of foil where there was essentially consistency in the aluminium content, is the portion of each foil which was further tested for oxidation resistance. Results of this analysis, in average weight percents, for each alloy foil appear in Table II.

TABLE II

| Heat | Average Al |
|---|---|
| Rare Earth-Containing Alloys | |
| 10-88 | 6.9 |
| 11-88 | 6.0 |
| 12-88 | 4.5 |
| 29-87* | 5.6 |
| Yttrium-Containing Alloys | |
| 28-87 | 5.4 |
| 31-87* | 7.0 |
| * Alloy originally included some aluminium. | |

As shown in Table II, average aluminium levels varied between about seven weight percent and 4.5 weight percent. The average aluminium content of the foils varied depending on whether or not the substrate contained aluminium. The foils with aluminium-free base metals had an average of 5.7 weight percent aluminium while the foils with aluminium-containing base metals had an average of 6.3 weight percent aluminium.

Although the batch-type process described above cannot be used for the continuous application of aluminium to strip metal, with some minor modifications to the process, continuous deposition could be made possible. Basically, in a continuous process, the salt bath, which floats on top of the aluminium bath, would be contained in a reservoir. The strip metal to be coated, which is approximately 0.5 millimetres thick, would enter the salt bath at a first end of the reservoir. Inside the salt bath, the strip metal is both cleaned and pre-heated by the flux. The strip metal would then exit the flux at the opposite end of the reservoir and enter the aluminium bath. The aluminium bath temperature would be maintained between about 704°C and 718°C. Continuous strip metal would be carried through the baths along appropriate rollers. Strip speed would be controlled so that the strip metal resides in the aluminium bath for preferably about two minutes. This duration appears to result in the optimum amount of about 5 weight percent aluminium for the composite base metal foil and coating. The strip metal would then exit the aluminium bath. Since the strip metal is not removed through the salt flux, the salt residue should be eliminated and therefore further cleaning steps would not be required. Once coated, the strip metal material would then be cold-rolled directly to a foil of appropriate thickness, which for the catalytic converter monolith structure would be an average thickness of approximately 0.05 millimetres. The thickness can be tailored to the particular application, but would probably not exceed about 0.075 or 0.1 millimetres since beyond this thickness it is extremely difficult to work with the foil.

It is foreseeable that other aluminium-coating processes could also be used. An example being a widely-used commercial aluminium-coating process for stainless steel, wherein the strip metal is passed through a high-temperature hydrogen gas atmosphere prior to being coated with the aluminium. In addition, it is also foreseeable that other applications may require various thicknesses of the aluminium coating, therefore, the continuous process just described could be modified so that the duration within the aluminium bath is varied.

The oxidation resistance of the materials of this invention was evaluated as follows. Oxidation weight gain behaviour was determined for the various aluminium-coated foils by heating the foils in air to about 1150°C. One foil sample for each material was employed for each test. After exposure to the air at that temperature, the foil was removed, weighed and re-inserted into the furnace at predetermined times. This procedure subjected the foils to several thermal cycles, hence if oxide-spalling occurred during the test, it would appear as erratic weight gains in the data.

Figures 1 to 3 compare the weight gains of all of the aluminium-coated alloys of this invention during oxidation. The units for all three of the figures are weight gain X $10^{-4}$ grams/square centimetre versus the square root of time in hours. Also shown in these Figures are data for the current production alloy for use in the catalytic converter monolith structures, the Fe-20Cr-5Al-rare earth alloy, and two other commercially-available aluminium-coated ferritic stainless steel foils having about 6 weight percent aluminium attributable to the aluminium coating thereof but no rare earth or yttrium additions; aluminium-coated 409 (Fe-11Cr) and aluminium-coated 439 (Fe-17.5Cr).

Figure 1 shows weight gain rate for three aluminium-coated ferritic stainless steels of this invention which have been modified with the rare earth additions, alloys 10-88 (0.014% rare earths), 11-88 (0.12% rare earths) and 12-88 (0.32% rare earths). The weight gains are low and monotonically increasing. This manner of oxide weight gain is preferred, since it indicates slow oxide growth and good oxide adherence to the base metal. Figure 1 also shows that these foils have equivalent or superior oxidation resistance to the standard Fe-20Cr-5Al-rare earth alloy foils which are represented by the shaded band within Figure 1. These results demonstrate that sulphur control can be achieved through the addition of the reactive elements (i.e., the rare earths and/or yttrium) to the base metal substrate. In particular, the reactive element additions can be made to the base metal alone and not to the coating layer.

It is believed that the addition of these reactive elements, i.e., the rare earths or yttrium as discussed later, is desirable since these elements have a strong affinity for sulphur. Sulphur left uncombined in the metal has been found to cause spalling of protective aluminium oxide films, which result in poor oxidation resistance. The rare earths and yttrium tie up sulphur by forming stable sulphides and thereby prevent spalling of the aluminium oxide layer. However, besides having a strong affinity for sulphur, the rare earths and yttrium exhibit strong affinities for nitrogen and oxygen also. Therefore it was not certain whether these additive elements would react preferentially with the nitrogen and oxygen present in the base metal, leaving the sulphur free to weaken the aluminium oxide/metal bond.

To determine the relative affinities of the rare earths and yttrium for these impurity elements, the three alloys of this invention (shown in Figure 1) were produced with controlled rare earth levels: 11-88 and 12-88 contained enough rare earths additions to react with all of the nitrogen, oxygen and sulphur present within the alloy, whilst 10-88 contained only enough rare earth additions to react with only the sulphur present. As shown in Figure 1, all three of the aluminium-coated alloys exhibited similar oxidation behaviour. This indicated that only sufficient rare earth additions were required to react with sulphur to attain good oxide adherence.

There are two theories as to why the rare earths and yttrium favourably react with sulphur instead of nitrogen or oxygen in the aluminium-coated foil. First, the rare earths may preferentially choose to react with the sulphur (versus the nitrogen and oxygen) in the base metal alloy and thereby tie-up the sulphur by forming stable refractory sulphides. However, we believe an alternative and more probable mechanism is as follows. The rare earths actually have a slightly higher affinity for oxygen than sulphur and therefore should preferentially react with oxygen. However, upon exposure to temperature, the aluminium coating begins to diffuse into the ferritic stainless steel base metal whereupon its high affinity for oxygen results in the formation of aluminium oxide particles in the metal, allowing the rare earths to react with the sulphur present.

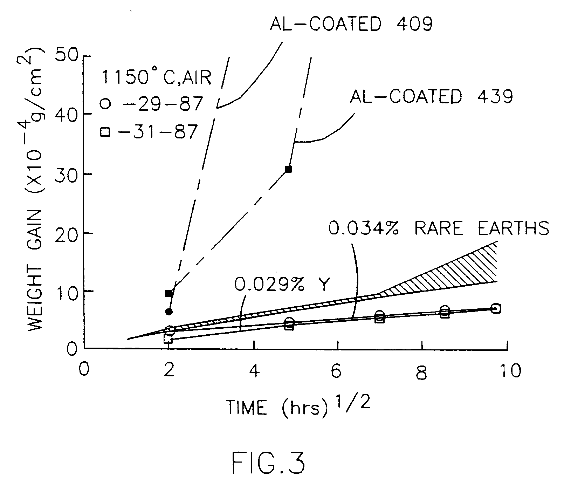

Yttrium which has nearly identical affinities for nitrogen, oxygen and sulphur, as compared to the rare earths, should predictably behave in the same manner as confirmed by Figures 2 and 3.

As shown in Figure 2, the oxide growth behaviour is illustrated for an aluminium-coated yttrium-modified alloy (28-87) of this invention. Alloy 28-87 did not contain any rare earth additions but did contain sufficient yttrium to react with all of the nitrogen, sulphur and oxygen present in the alloy. As predicted, the alloy also had excellent oxidation resistance which was comparable to that of the current Fe-20Cr-5Al-rare earth alloys.

Figure 3 shows the weight gain data for aluminium-coated ferritic stainless steel foils of this invention, wherein the base metal foil contained about one weight percent aluminium (alloys 29-87 having about 0.034% rare earth additions and 31-87 having about 0.029% yttrium addition). The aluminium was added to these base metal foils to determine whether aluminium additions were required within the base metal to produce the superior oxidation resistance. Therefore, aluminium was added to the base metal alloys in an amount sufficient to react with the nitrogen and oxygen present, and correspondingly ensure that additions of rare earths or yttrium would react preferentially with the sulphur present in the alloy. As shown these foils again exhibited excellent oxidation resistance which was comparable to that of the current Fe-20Cr-5Al-rare earth alloys. However, these alloys also exhibited oxidation resistance which was comparable to alloys 10-88 as shown in Figure 1 which had 0.014 weight percent rare earth additions. From this comparison, it can be safely said that the rare earths tie-up sulphur in the coated foil preferentially and that aluminium additions are not required within the base metal substrate.

In addition, it is interesting to note that in Figures 1 to 3 the aluminium-coated 409 and 439 alloys, which contained no rare earth or yttrium additions but a comparable percentage of aluminium within the coating, exhibited fast oxide growth and oxide-spalling on the surface. It is believed that the poor weight gain behaviour by these alloys is due to the lack of control of sulphur within the base metal iron-chromium substrate. These base metals contain titanium which is not as effective at forming the desired sulphides, as compared to the rare earths or yttrium.

In particular, for the rare earth elements and/or yttrium to effectively control sulphur within the iron-chromium base metal, sufficient additions must be made to account for their reaction with sulphur. The rare earths and yttrium both react to form monosulphides and can be added interchangeably with no detrimental results observed. The rare earth additions of cerium, lanthanum, neodymium and praseodymium are in the form of commercially-available misch metal which is characterized, by weight, of approximately 46.8% cerium, 29.2% lanthanum, 14.4% neodymium, 4.4% praseodymium and 5.2% iron. Therefore it is apparent that from these rare earth additions of misch metal, it is the cerium and lanthanum which are providing the bulk of the reactions with the sulphur. It is also noted that the rare earth additions could be made by adding the individual elements separately instead of from a misch metal mixture. However, the cost of the individual elements may be prohibitive since the misch metal is relatively inexpensive and adequately provides the benefits of this invention.

The amount of required rare earth and/or yttrium additions to the base metal can be expressed as follows:

$$[0.229 \times wt\%Ce + 0.231 \times wt\%La + 0.222 \times wt\%Nd + 0.228 \times wt\%Pr + 0.361 \times wt\%Y] / wt\%S \geq 1$$

In this equation the rare earth and yttrium coefficients are each derived by dividing the atomic weight of suphur by the atomic weight of the respective rare earth or yttrium present in the added material. Thus this equation, in effect, compares the quantity of atoms of the rare earths and yttrium present with the quantity of atoms of sulphur present, and states that the ratio of these quantities should be 1 or greater.

The elemental additions required by the above equation represent the minimum amount required for reaction with the sulphur. In theory, there is not a maximum amount necessitated. However, practically the sulphur content within a stainless steel is generally always very low, i.e., around a few thousandths of a weight percent up to at the most about 0.03 weight percent. Therefore, it is believed that total additions of either the rare earths and/or yttrium should preferably result in an atomic ratio as expressed by the above equation of not much more than 1. Certainly, it is believed that additions of these rare earth elements of greater than about 0.5 weight percent would become deleterious to the integrity of the base metal alloy. The physical properties of the alloy would begin to suffer by this relatively high amount of rare earths. In addition, many intermetallic compounds would probably form at the grain boundaries by the excess amount of these materials within the alloys. It is also believed that such large additions of yttrium would not be as deleterious to the integrity of the base metal, however the cost of yttrium would make additions greater than about 0.5 weight percent prohibitive. Therefore, the addition of rare earths and yttrium is at least equivalent in atom ratio to the suphur content and in an amount ranging between about 0.03 and 0.1 weight percent of the foil.

Also, it is noted that the rare earths and yttrium may be interchanged or used concurrently, since they are all roughly equal in their effectiveness. It is the total addition of all of these metals which is critical to the invention. However, the yttrium may not be as preferred, due to its relatively high cost as compared to the rare earth elements.

Besides the excellent oxidation resistance, these aluminium-coated alloys of this invention exhibited excellent aluminium oxide whisker growth. This is important since it is the aluminium oxide whiskers which carry the subsequently deposited catalytically active materials when used in a catalytic converter environment for conversion of exhaust gases. The formation of these whiskers is preferred since the whiskers ensure good adherence between the foil and the catalytically-active material. Magnesium which is typically present in small amounts, about 0.01 weight percent in conventional iron-chromium-aluminium alloys used for high-temperature oxidation resistance, such as the Fe-20Cr-5Al-rare earth alloy, has been shown to inhibit whisker growth by the oxide layer. It is believed that the magnesium is introduced within the alloy during the melting of the alloy when the aluminium attacks the magnesium-oxide-containing refractories which line the steel melting and refining vessels. Since no aluminium is required in the base metal alloys of this invention, the production processed alloys should be magnesium-free. Therefore the aluminium-coated alloys of this invention should produce high aspect ratio whiskers upon formation of the aluminium oxide. This was confirmed by visual inspection and the absence of magnesium was subsequently verified by chemical analysis.

The aluminium-coated ferritic stainless steel alloys of this invention are particularly useful for oxidation resistance at high temperatures, such as the monolith catalytic converter support for automobile exhaust gas conversion. The aluminium-coated alloys are resistant to thermal cycling effects at elevated temperatures. During exposure of the aluminium-coated alloys to high temperatures, a protective layer of aluminium oxide forms on its surface. The oxide layer is continuous, slow-growing and tenaciously adherent to the base metal foil, thereby providing outstanding oxidation resistance.

As stated previously, a particularly inventive feature of this material is that the ferritic stainless steel base metal foil contains essentially no aluminium content, but does contain an addition from the group consisting of cerium, lanthanum, neodymium, praseodymium and yttrium. The addition of the rare earths, particularly cerium and lanthanum, or yttrium to the base metal alloy eventually causes the formation of stable sulphide particles within the aluminium-coated foil. This prevents the sulphur within the metal from diffusing out to the interface between the oxide layer and the metal foil, whereat it would cause oxide-spalling and prevent good adherence between the oxide and metal foil.

The virtual elimination of aluminium from the base metal alloy results in a material having increased ductility as compared to the conventional iron-chromium-aluminium alloys. This was determined by visual inspection and physical processing. The aluminium-free base metal alloy of this invention can be continually cast, as well as surface-ground at room temperature without excessive cracking. In addition, the aluminium-free alloy of this invention can tolerate a higher degree of remaining surface defects during the rolling process, as compared to the conventional aluminium-containing alloy. Therefore the processing costs associated with the alloy of this invention are significantly reduced.

While the present invention has been described in terms of a preferred embodiment, it is apparent that other forms could be readily adopted by one skilled in the art, such as by modifying the processing parameters, or by modifying the materials like using elemental rare earth additions instead of misch metal additions, or by modifying the thickness of the aluminium layer or base metal foil. Accordingly, the scope of the invention is to be limited only by the scope of the following claims.

## Claims

1. An aluminium-coated ferritic stainless steel foil, adaptable for use as a catalyst support for treatment of exhaust gases from an automotive internal combustion engine, which foil forms an adherent aluminium oxide film thereon at elevated temperatures above about 700 °C, the ferritic stainless steel portion of said foil including essentially iron, about 15 to about 25 percent by weight of chromium, normal steelmaking impurities of oxygen, nitrogen, and carbon, and up to about 0.03 percent sulphur, wherein said ferritic stainless steel portion of said foil is initially essentially aluminium-free and thereby sufficiently ductile as to be readily configurable; in that said ferritic stainless steel portion of said foil includes an addition from the group consisting of cerium, lanthanum, neodymium, praseodymium and yttrium, wherein the total addition from this group is defined by an atom ratio of at least one when compared to said sulphur content but not more than about 0.1 weight percent of the foil; and in that the aluminium coating is an adherent aluminium layer which constitutes between three to seven weight percent of the aluminium-coated ferritic stainless steel foil such that, upon exposure to said elevated temperatures, said ferritic stainless steel foil and said aluminium layer sufficiently cooperate with one another as to ensure adherence of the concurrently-grown aluminium oxide film.

2. An aluminium-coated ferritic stainless steel foil according to claim 1, in which said addition is yttrium in an amount ranging between 0.03 and 0.1 weight percent of the foil.

3. An aluminium-coated ferritic stainless steel foil according to claim 1, in which, upon exposure to said elevated temperatures, said ferritic stainless steel foil and said aluminium layer further co-operate with one another to promote growth of high aspect aluminium oxide whiskers on said layer.

9

4. An aluminium-coated ferritic stainless steel foil according to claim 1, in which the thickness of said foil is not greater than 0.1 millimetres.

5. A monolithic support foil for carrying catalysts thereon for treatment of the exhaust gas from an automotive internal combustion engine, which foil forms an adherent aluminium oxide film thereon at elevated temperatures above about 700 °C, said monolithic support foil comprising: a ferritic stainless steel base which includes iron, about 15 to about 25 percent by weight of chromium, normal steelmaking impurities of oxygen, nitrogen, and carbon, and up to about 0.03 percent sulphur; and an adherent aluminium layer on the surface of said ferritic stainless steel base which will carry the catalysts, wherein said ferritic stainless steel base is initially essentially aluminium-free, and contains an addition from the group consisting of cerium, lanthanum, neodymium, praseodymium and yttrium, in which the total addition from this group is defined by an atom ratio of at least one when compared to said sulphur content but not more than about 0.1 weight percent of the foil; and said adherent aluminium layer constitutes between three to seven weight percent of the aluminium-coated ferritic stainless steel monolithic support foil.

6. A monolithic support foil according to claim 5, in which said addition is yttrium in an amount ranging between 0.03 and 0.1 weight percent of the foil.

7. A monolithic support foil according to claim 5, in which said ferritic stainless steel base and said aluminium layer sufficiently co-operate with one another, upon exposure to said elevated temperatures, as to promote growth of high aspect aluminium oxide whiskers upon said layer.

**Patentansprüche**

1. Aluminiumbeschichtetes Feinblech aus ferritischem rostfreiem Stahl, geeignet zur Verwendung als Katalysatorträger zur Behandlung von Abgasen aus einem Kraftfahrzeugverbrennungsmotor, wobei das Feinblech einen haftenden Aluminiumoxidfilm hierauf bei erhöhten Temperaturen oberhalb etwa 700 ° C bildet, der Anteil des ferritischen rostfreien Stahls dieses Feinbleches im wesentlichen Eisen, etwa 15 bis etwa 25 Gew.-% Chrom, normale Stahlherstellungs-Verunreinigungen an Sauerstoff, Stickstoff und Kohlenstoff sowie bis zu etwa 0,03 % Schwefel einschließt, und wobei dieser Anteil des ferritischen rostfreien Stahls dieses Feinbleches anfänglich im wesentlichen frei von Aluminium und hierdurch ausreichend duktil ist, so daß es leicht verformbar ist, dieser Anteil des ferritischen rostfreien Stahls dieses Feinbleches einen Zusatz aus der aus Cer, Lanthan, Neodym, Praseodym und Yttrium bestehenden Gruppte einschließt, wobei der Gesamtzusatz aus dieser Gruppe durch ein Atomverhältnis von wenigstens eins, verglichen mit diesem Schwefelgehalt, jedoch nicht mehr als etwa 0,1 Gew.-% des Feinbleches begrenzt ist, und wobei der Aluminiumüberzug eine haftende Aluminiumschicht ist, welche zwischen drei bis sieben Gew.-% des aluminiumbeschichteten Feinbleches aus ferritischem rostfreiem Stahl bildet, so daß bei Exposition bei diesen erhöhten Temperaturen dieses Feinblech aus ferritischem rostfreiem Stahl und diese Aluminiumschicht ausreichend miteinander zusammenwirken, so daß Haftung des gleichzeitig gewachsenen Aluminiumoxidfilms sichergestellt ist.

2. Aluminiumbeschichtetes Feinblech aus ferritischem rostfreiem Stahl nach Anspruch 1, in welchem dieser Zusatz Yttrium in einer Menge im Bereich zwischen 0,03 und 0,1 Gew.-% des Feinbleches ist.

3. Aluminiumbeschichtetes Feinblech aus ferritischem rostfreiem Stahl nach Anspruch 1, in welchem bei Exposition bei diesen erhöhten Temperaturen dieses Feinblech aus ferritischem rostfreiem Stahl und diese Aluminiumschicht weiter miteinander zusammenwirken, um das Wachstum von Whiskern aus Aluminiumoxid mit hohem Längenverhältnis auf dieser Schicht zu fördern.

4. Aluminiumbeschichtetes Feinblech aus ferritischem rostfreiem Stahl nach Anspruch 1, in welchem die Dicke dieses Feinbleches nicht größer als 0,1 mm ist.

5. Monolithisches Trägerfeinblech zum Tragen von Katalysatoren hierauf zur Behandlung des Abgases aus einem Kraftfahrzeugverbrennungsmotor, wobei das Feinblech einen haftenden Aluminiumoxidfilm hierauf bei erhöhten Temperaturen oberhalb etwa 700 ° C bildet, und wobei dieses monolithische Trägerfeinblech umfaßt: eine Unterlage aus ferritischem rostfreiem Stahl, welche Eisen, etwa 15 bis etwa 25 Gew.-% Chrom, normale Stahlherstellungs-Verunreinigungen an Sauerstoff, Stickstoff und Kohlenstoff sowie bis zu etwa 0,03 % Schwefel einschließt, und eine haftende Aluminiumschicht auf der Oberfläche dieser Unterlage aus ferritischem rostfreiem Stahl, die den Katalysator trägt, wobei diese Unterlage aus ferritische rostfreiem Stahls anfänglich im wesentlichen frei von Aluminium ist und einen Zusatz aus der aus Cer, Lanthan, Neodym, Praseodym und Yttrium bestehenden Gruppte enthält, wobei der Gesamtzusatz aus dieser Gruppe durch ein Atomverhältnis von wenigstens eins, verglichen mit diesem Schwefelgehalt, jedoch nicht mehr als etwa 0,1 Gew.-% des Feinbleches begrenzt ist, und wobei diese haftende Aluminiumschicht zwischen drei bis sieben Gew.-% des aluminiumbeschichteten monolithischen Trägerfeinbleches aus ferritischem rostfreiem Stahl bildet.

6.  Monolithisches Trägerfeinblech nach Anspruch 5, in welchem dieser Zusatz Yttrium in einer Menge im Bereich zwischen 0,03 und 0,1 Gew.-% des Feinbleches ist.

7.  Monolithisches Trägerfeinblech nach Anspruch 5, in welchem diese Unterlage aus ferritischem rostfreiem Stahl und diese Aluminiumschicht bei Exposition bei diesen erhöhten Temperaturen ausreichend miteinander zusammenwirken, um das Wachstum von Whiskern aus Aluminiumoxid mit hohem Längenverhältnis auf dieser Schicht zu fördern.

**Revendications**

1.  Feuille d'acier inoxydable ferritique revêtue d'aluminium, adaptable pour être utilisée comme support de catalyseur pour le traitement des gaz d'échappement d'un moteur à combustion interne d'automobile, laquelle feuille forme à sa surface un film d'oxyde d'aluminium adhérent à des températures élevées supérieures à environ 700°C, la partie en acier inoxydable ferritique de ladite feuille comportant essentiellement du fer, environ 15 à environ 25 pour-cent en poids de chrome, des impuretés, normales dans l'élaboration de l'acier, d'oxygène, d'azote, et de carbone, et jusqu'à environ 0,03 pour-cent de soufre, dans laquelle ladite partie en acier inoxydable ferritique de ladite feuille est initialement pratiquement exempte d'aluminium et ainsi suffisamment ductile pour être facilement mise en forme; ladite partie en acier inoxydable ferritique de ladite feuille comprend une addition d'élément du groupe constitué du cérium, du lanthane, du néodyme, du praséodyme et de l'yttrium, pour laquelle l'addition totale d'éléments de ce groupe est définie par un rapport atomique égal à au moins 1 comparé à ladite teneur en soufre, mais ne dépassant pas environ 0,1 pour-cent en poids de la feuille; le revêtement d'aluminium est une couche d'aluminium adhérente qui représente entre trois et sept pour-cent en poids de la feuille d'acier inoxydable ferritique revêtue d'aluminium, telle que, lors de l'exposition auxdites températures élevées, ladite feuille en acier inoxydable ferritique et ladite couche d'aluminium coopèrent suffisamment l'une avec l'autre pour assurer l'adhérence du film d'oxyde d'aluminium qui s'est développé simultanément.

2.  Feuille d'acier inoxydable ferritique revêtue d'aluminium selon la revendication 1, dans laquelle ladite addition est de l'yttrium en quantité comprise entre 0,03 et 0,1 pour-cent en poids de la feuille.

3.  Feuille d'acier inoxydable ferritique revêtue d'aluminium selon la revendication 1, dans laquelle, lors de l'exposition auxdites températures élevées, ladite feuille en acier inoxydable ferritique et ladite couche d'aluminium continuent à coopérer l'une avec l'autre pour favoriser la croissance, sur ladite couche, de whiskers d'oxyde d'aluminium à rapport d'allongement élevé.

4.  Feuille d'acier inoxydable ferritique revêtue d'aluminium selon la revendication 1, dans laquelle l'épaisseur de ladite feuille n'est pas supérieure à 0,1 millimètre.

5.  Feuille de support monolithique pour porter, à sa surface, des catalyseurs pour le traitement des gaz d'échappement d'un moteur à combustion interne d'automobile, laquelle feuille forme à sa surface un film d'oxyde d'aluminium adhérent, à des températures élevées supérieures à environ 700°C, ladite feuille de support monolithique comportant: une base en acier inoxydable ferritique qui comprend du fer, environ 15 à environ 25 pour-cent en poids de chrome, des impuretés, normales dans l'élaboration de l'acier, d'oxygène, d'azote, et de carbone, et jusqu'à environ 0,03 pour-cent de soufre; et une couche d'aluminium adhérente, à la surface de ladite base en acier inoxydable ferritique qui va porter les catalyseurs; dans laquelle ladite base en acier inoxydable ferritique est initialement pratiquement exempte d'aluminium et comprend une addition d'élément du groupe constitué du cérium, du lanthane, du néodyme, de praséodyme et de l'yttrium, pour laquelle l'addition totale d'éléments de ce groupe est définie par un rapport atomique égal à au moins 1 comparé à ladite teneur en soufre, mais ne dépassant pas environ 0,1 pour-cent en poids de la feuille; et ladite couche d'aluminium adhérente représente entre trois et sept pour-cent en poids de la feuille de support monolithique en acier inoxydable ferritique revêtue d'aluminium.

6. Feuille de support monolithique selon la revendication 5, dans laquelle ladite addition est de l'yttrium en quantité comprise entre 0,03 et 0,1 pour-cent en poids de la feuille.

7. Feuille de support monolithique selon la revendication 5, dans laquelle ladite base en acier inoxydable ferritique et ladite couche d'aluminium coopèrent suffisamment l'une avec l'autre, lors de l'exposition auxdites températures élevées, pour favoriser la croissance, sur ladite couche, de whiskers d'oxyde d'aluminium à rapport d'allongement élevé.

FIG.1

FIG.2

13

FIG.3